# EUROPEAN PATENT APPLICATION

(11) **EP 4 361 161 A1**
(43) Date of publication of application: **01.05.2024**
(21) Application number: 22828091.3
(22) Date of filing: 13.05.2022
(51) Int. Cl.: C07F 7/10, C08G 77/26, C09K 3/18

(54) **AQUEOUS COMPOSITION AND METHOD FOR PRODUCING SAME**

(30) Priority: 24.06.2021 JP 2021104787
(71) Applicant: SHIN-ETSU CHEMICAL CO., LTD., Tokyo 1000005 (JP)
(72) Inventor: NYUUGAKU Takeshi, Joetsu-shi, Niigata 942-8601 (JP)
(74) Representative: Mewburn Ellis LLP
(86) International application number: PCT/JP2022/020188
(87) International publication number: WO 2022/270172

(57) **Abstract**

This aqueous composition contains: a silanol compound having an imidazolidinone group represented by general formula (1); and a condensate of the silanol compound. The content of an alcohol is less than 5 mass% relative to the content of the silanol compound and the condensate of the silanol compound. The aqueous composition suppresses the generation of alcohols, suppresses excessive condensation of the silanol compound, prevents an increase in molecular weight over time, and yields a colorless transparent aqueous solution. 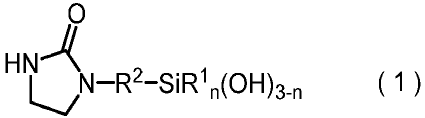 (In the formula, R¹ denotes a halogen atom or a methyl group, R² denotes an unsubstituted divalent hydrocarbon group having 1-8 carbon atoms, and n denotes an integer between 0 and 2.)

## Description

### TECHNICAL FIELD

The present invention relates to an aqueous composition and a method for producing the same, and more particularly, to an aqueous composition containing a silanol compound and a condensate of a silanol compound, and a method for producing the same.

### BACKGROUND ART

In an organosilicon compound having a hydrolyzable silyl group and an organic group, a silanol group generated by hydrolysis of the hydrolyzable silyl group forms a covalent bond with a hydroxyl group on the surface of an inorganic material, and an organic group reacts with the organic material, so that it is possible to link the organic material and the inorganic material which are usually difficult to be bound together. This makes it possible to impart properties such as heat resistance, water resistance, weather resistance, improvement in mechanical strength, adhesion, dispersibility, hydrophobicity, and rust prevention to an organic-inorganic composite material.

Utilizing these properties, the organosilicon compound is used in a wide range of fields and applications such as a silane coupling agent, a resin additive, a surface treatment agent, a fiber treatment agent, an adhesive agent, a paint additive, a polymer modifier, and the like.

Among the above organosilicon compounds, an imidazolidinone silane compound, which is an organosilicon compound having an imidazolidinone group, can enhance the adhesion of the organic-inorganic composite material because the imidazolidinone group exhibits high compatibility with various organic materials and inorganic materials.

Examples of such an imidazolidinone silane compound include 1-[3-(trimethoxysilyl)propyl]-2-imidazolidinone and 1-[3-(dimethoxymethylsilyl)propyl]-2-imidazolidinone (Patent Document 1).

### PRIOR ART DOCUMENTS

### PATENT DOCUMENTS

Patent Document 1: USP 3209053

### SUMMARY OF INVENTION

### TECHNICAL PROBLEM

However, in the imidazolidinone silane compound having an alkoxysilyl group described in Patent Document 1, a considerable amount of alcohol is generated by hydrolysis of the alkoxysilyl group. In recent years, reduction of volatile organic compounds (VOC) has been a major theme in environmental problems deeply related to global warming, health problems, and the like, and the imidazolidinone silane compound generates a large amount of alcohol, and there is a concern about load on the environment.

In addition, the alcohol generated by hydrolysis may lower the compatibility between the imidazolidinone silane compound and various organic or inorganic materials, and there is a possibility that the desired effect derived from the imidazolidinone group is not sufficiently exhibited.

As one of the methods for reducing the alcohol generation amount of the alkoxysilane compound which is an organosilicon compound having an alkoxysilyl group, there is a method of hydrolyzing the alkoxysilane compound to produce a silanol compound which is an organosilicon compound having a silanol group, and then removing the generated alcohol to prepare an aqueous composition containing the silanol compound, a condensate of the silanol compound, and water.

However, in the case of an alkoxysilane compound having an organic group such as an alkyl group, an aryl group, an alkenyl group, an epoxy group, a mercapto group, and a (meth)acrylic group; secondary or tertiary amino groups such as arylamino groups; a urea skeleton such as an isocyanurate ring or a glycoluril ring, silanol groups are irreversibly condensed with each other after the hydrolysis reaction, so that the aqueous solution becomes high molecular weight over time and is unable to maintain a uniform aqueous composition. That is, in the hydrolysis reaction of the trialkoxysilane compound or the dialkoxysilane compound having the organic group, the secondary or tertiary amino group, or the urea skeleton, a trisilanol compound or a disilanol compound is produced. These silanol compounds produce a silanol condensate having a linear, branched, cyclic, or three-dimensional network structure by condensation of silanol groups. Furthermore, since these silanol condensates grow into a solid (gel-like material) or a liquid (oil-like material) high-molecular-weight substance having low compatibility with the aqueous solution as the condensation proceeds, the aqueous solution cannot maintain a chemically stable state (uniform state).

In addition, the alcohol generated by the hydrolysis reacts with the silanol compound to regenerate the alkoxysilane compound, and thus plays a role of temporarily suppressing the increase in molecular weight of the aqueous solution over time. However, when the alcohol is removed from the aqueous solution, condensation between silanol groups is accelerated, and thus the high-molecular-weight substance is remarkably increased.

In this regard, in the hydrolysis of an alkoxysilane compound having an amino group or a primary amino group such as an alkylenediamino group, condensation between silanol groups reaches equilibrium, and thus the silanol condensate to be produced does not grow into a high-molecular-weight substance having low compatibility with an aqueous solution. This makes it possible to maintain a chemically stable state of the aqueous solution. Furthermore, since the alcohol can be removed from the aqueous solution, it is useful as one of methods for reducing the amount of alcohol generated in the alkoxysilane compound.

However, although the alkoxysilane compound having a primary amino group can prepare an aqueous solution in a chemically stable state in which a high-molecular-weight substance having low compatibility with the aqueous solution is not generated, the appearance of the aqueous solution turns yellow over time, and thus the alkoxysilane compound cannot be applied to applications requiring colorless transparency.

Therefore, it has been desired to develop a colorless transparent aqueous composition that suppresses excessive condensation of a silanol compound while suppressing generation of alcohol and prevents an increase in molecular weight over time.

The present invention has been made under the above circumstances, and an object thereof is to provide an aqueous composition capable of preparing a colorless transparent aqueous solution while suppressing generation of alcohol and suppressing excessive condensation of a silanol compound to prevent an increase in molecular weight over time, and a method for producing the same.

### SOLUTION TO PROBLEM

As a result of intensive studies to achieve the above object, the present inventor has found that an aqueous composition containing a silanol compound having an imidazolidinone group and a condensate thereof is an aqueous composition capable of preparing a colorless transparent aqueous solution while suppressing generation of alcohol and suppressing excessive condensation of the silanol compound to prevent an increase in molecular weight associated over time, and has completed the present invention.

That is, the present invention provides:
1. an aqueous composition comprising a silanol compound having an imidazolidinone group of the following general formula (1): 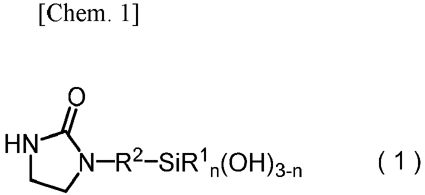 wherein, R¹ represents a halogen atom or a methyl group, R² represents an unsubstituted divalent hydrocarbon group having 1 to 8 carbon atoms, and n represents an integer of 0 to 2,
   and a condensate of the silanol compound, wherein
   a content of an alcohol is less than 5 wt% with respect to the silanol compound and the condensate of the silanol compound,
2. a method for producing the aqueous composition according to 1 comprising
   a step of hydrolyzing the imidazolidinone silane compound of the following general formula (2): 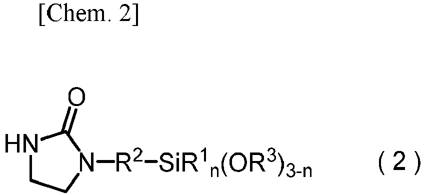 wherein, R¹, R² and n have the same meaning as described above, and R³ represents a substituted or unsubstituted monovalent hydrocarbon group having 1 to 10 carbon atoms,
   in the presence of water to remove the generated alcohol, and
3. the method for producing the aqueous composition according to 2, wherein 3 to 100,000 moles of the water are used per 1 mole of silicon atoms of the imidazolidinone silane compound.

### ADVANTAGEOUS EFFECTS OF INVENTION

The aqueous composition of the present invention does not generate alcohol and suppresses excessive condensation of a silanol compound, thereby preventing an increase in molecular weight over time and maintaining a chemically stable state.

In addition, since the aqueous solution prepared by the aqueous composition of the present invention is transparent in appearance and does not turn yellow over time, the aqueous solution can be applied to applications requiring colorless transparency.

Furthermore, in the aqueous composition of the present invention, since the imidazolidinone group exhibits high compatibility with various organic materials and inorganic materials, when the aqueous composition is used as a silane coupling agent, a surface treatment agent, or the like, the adhesion of the organic-inorganic composite material can be enhanced.

### DESCRIPTION OF EMBODIMENTS

Hereinafter, the present invention will be specifically described.

The aqueous composition of the present invention includes a silanol compound having an imidazolidinone group and a condensate thereof.

In the aqueous composition of the present invention, the silanol compound having an imidazolidinone group is a silanol compound (hereinafter, the compound is referred to as "compound (1)") having an imidazolidinone group of the following general formula (1).

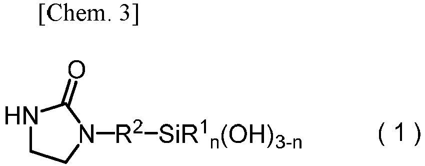

In the general formula (1), R¹ represents a halogen atom such as a chlorine atom, a bromine atom, or an iodine atom, or a methyl group, and a methyl group is preferable particularly from the viewpoint of availability.

R² represents an unsubstituted divalent hydrocarbon group having 1 to 8 carbon atoms, preferably 1 to 6 carbon atoms, more preferably 1 to 5 carbon atoms, and still more preferably 1 to 4 carbon atoms.

The divalent hydrocarbon group may be linear, branched, or cyclic, and specific examples thereof include a linear alkylene group such as methylene, ethylene, trimethylene, tetramethylene, pentamethylene, hexamethylene, heptamethylene, and octamethylene groups; a branched alkylene group such as sec-propylene, sec-butylene, tert-butylene, sec-pentylene, tert-pentylene, sec-hexylene, tert-hexylene, sec-heptylene, tert-heptylene, sec-octylene, tert-octylene groups; and a cyclic alkylene group such as cyclopropylene, cyclopentylene, and cyclohexylene groups.

Among them, R² is preferably an unsubstituted linear alkylene group having 1 to 5 carbon atoms, and more preferably an unsubstituted linear alkylene group having 1 to 4 carbon atoms such as a methylene group or an ethylene group particularly from the viewpoint of availability.

In addition, n is an integer of 0 to 2, and is preferably 0 or 1 from the viewpoint of enhancing adhesion by reacting with a plurality of hydroxyl groups on the surface of the substrate particularly when used as a silane coupling agent, a surface treatment agent, or the like.

Specific examples of the compound (1) include silanol compounds such as 1-[3-(trihydroxysilyl)methyl]-2-imidazolidinone, 1-[3-(dihydroxymethylsilyl)methyl]-2-imidazolidinone, 1-[3-(hydroxydimethylsilyl)methyl]-2-imidazolidinone, 1-[3-(trihydroxysilyl)ethyl]-2-imidazolidinone, 1-[3-(dihydroxymethylsilyl)ethyl]-2-imidazolidinone, 1-[3-(hydroxydimethylsilyl)ethyl]-2-imidazolidinone, 1-[3-(trihydroxysilyl)propyl]-2-imidazolidinone, 1-[3-(dihydroxymethylsilyl)propyl]-2-imidazolidinone, 1-[3-(hydroxydimethylsilyl)propyl]-2-imidazolidinone, 1-[3-(trihydroxysilyl)butyl]-2-imidazolidinone, 1-[3-(dihydroxymethylsilyl)butyl]-2-imidazolidinone, 1-[3-(hydroxydimethylsilyl)butyl]-2-imidazolidinone, 1-[3-(trihydroxysilyl)pentyl]-2-imidazolidinone, 1-[3-(dihydroxymethylsilyl)pentyl]-2-imidazolidinone, 1-[3-(hydroxydimethylsilyl)pentyl]-2-imidazolidinone, 1-[3-(trihydroxysilyl)hexyl]-2-imidazolidinone, 1-[3-(dihydroxymethylsilyl)hexyl]-2-imidazolidinone, 1-[3-(hydroxydimethylsilyl)hexyl]-2-imidazolidinone, 1-[3-(trihydroxysilyl)heptyl]-2-imidazolidinone, 1-[3-(dihydroxymethylsilyl)heptyl]-2-imidazolidinone, 1-[3-(hydroxydimethylsilyl)heptyl]-2-imidazolidinone, 1-[3-(trihydroxysilyl)octyl]-2-imidazolidinone, 1-[3-(dihydroxymethylsilyl)octyl]-2-imidazolidinone, 1-[3-(hydroxydimethylsilyl)octyl]-2-imidazolidinone; fluorosilanol compounds such as 1-[3-(fluorodihydroxysilyl)methyl]-2-imidazolidinone, 1-[3-(difluorohydroxysilyl)methyl]-2-imidazolidinone, 1-[3-(fluorohydroxymethylsilyl)methyl]-2-imidazolidinone, 1-[3-(fluorodihydroxysilyl)ethyl]-2-imidazolidinone, 1-[3-(difluorohydroxysilyl)ethyl]-2-imidazolidinone, 1-[3-(fluorohydroxymethylsilyl)ethyl]-2-imidazolidinone, 1-[3-(fluorodihydroxysilyl)propyl]-2-imidazolidinone, 1-[3-(difluorohydroxysilyl)propyl]-2-imidazolidinone, 1-[3-(fluorohydroxymethylsilyl)propyl]-2-imidazolidinone, 1-[3-(fluorodihydroxysilyl)butyl]-2-imidazolidinone, 1-[3-(difluorohydroxysilyl)butyl]-2-imidazolidinone, 1-[3-(fluorohydroxymethylsilyl)butyl]-2-imidazolidinone, 1-[3-(fluorodihydroxysilyl)pentyl]-2-imidazolidinone, 1-[3-(difluorohydroxysilyl)pentyl]-2-imidazolidinone, 1-[3-(fluorohydroxymethylsilyl)pentyl]-2-imidazolidinone, 1-[3-(fluorodihydroxysilyl)hexyl]-2-imidazolidinone, 1-[3-(difluorohydroxysilyl)hexyl]-2-imidazolidinone, 1-[3-(fluorohydroxymethylsilyl)hexyl]-2-imidazolidinone, 1-[3-(fluorodihydroxysilyl)heptyl]-2-imidazolidinone, 1-[3-(difluorohydroxysilyl)heptyl]-2-imidazolidinone, 1-[3-(fluorohydroxymethylsilyl)heptyl]-2-imidazolidinone, 1-[3-(fluorodihydroxysilyl)octyl]-2-imidazolidinone, 1-[3-(difluorohydroxysilyl)octyl]-2-imidazolidinone, 1-[3-(fluorohydroxymethylsilyl)octyl]-2-imidazolidinone; chlorosilanol compounds such as 1-[3-(chlorodihydroxysilyl)methyl]-2-imidazolidinone, 1-[3-(dichlorohydroxysilyl)methyl]-2-imidazolidinone, 1-[3-(chlorohydroxymethylsilyl)methyl]-2-imidazolidinone, 1-[3-(chlorodihydroxysilyl)ethyl]-2-imidazolidinone, 1-[3-(dichlorohydroxysilyl)ethyl]-2-imidazolidinone, 1-[3-(chlorohydroxymethylsilyl)ethyl]-2-imidazolidinone, 1-[3-(chlorodihydroxysilyl)propyl]-2-imidazolidinone, 1-[3-(dichlorohydroxysilyl)propyl]-2-imidazolidinone, 1-[3-(chlorohydroxymethylsilyl)propyl]-2-imidazolidinone, 1-[3-(chlorodihydroxysilyl)butyl]-2-imidazolidinone, 1-[3-(dichlorohydroxysilyl)butyl]-2-imidazolidinone, 1-[3-(chlorohydroxymethylsilyl)butyl]-2-imidazolidinone, 1-[3-(chlorodihydroxysilyl)pentyl]-2-imidazolidinone, 1-[3-(dichlorohydroxysilyl)pentyl]-2-imidazolidinone, 1-[3-(chlorohydroxymethylsilyl)pentyl]-2-imidazolidinone, 1-[3-(chlorodihydroxysilyl)hexyl]-2-imidazolidinone, 1-[3-(dichlorohydroxysilyl)hexyl]-2-imidazolidinone, 1-[3-(chlorohydroxymethylsilyl)hexyl]-2-imidazolidinone, 1-[3-(chlorodihydroxysilyl)heptyl]-2-imidazolidinone, 1-[3-(dichlorohydroxysilyl)heptyl]-2-imidazolidinone, 1-[3-(chlorohydroxymethylsilyl)heptyl]-2-imidazolidinone, 1-[3-(chlorodihydroxysilyl)octyl]-2-imidazolidinone, 1-[3-(dichlorohydroxysilyl)octyl]-2-imidazolidinone, 1-[3-(chlorohydroxymethylsilyl)octyl]-2-imidazolidinone; bromosilanol compounds such as 1-[3-(bromodihydroxysilyl)methyl]-2-imidazolidinone, 1-[3-(dibromohydroxysilyl)methyl]-2-imidazolidinone, 1-[3-(bromohydroxymethylsilyl)methyl]-2-imidazolidinone, 1-[3-(bromodihydroxysilyl)ethyl]-2-imidazolidinone, 1-[3-(dibromohydroxysilyl)ethyl]-2-imidazolidinone, 1-[3-(bromohydroxymethylsilyl)ethyl]-2-imidazolidinone, 1-[3-(bromodihydroxysilyl)propyl]-2-imidazolidinone, 1-[3-(dibromohydroxysilyl)propyl]-2-imidazolidinone, 1-[3-(bromohydroxymethylsilyl)propyl]-2-imidazolidinone, 1-[3-(bromodihydroxysilyl)butyl]-2-imidazolidinone, 1-[3-(dibromohydroxysilyl)butyl]-2-imidazolidinone, 1-[3-(bromohydroxymethylsilyl)butyl]-2-imidazolidinone, 1-[3-(bromodihydroxysilyl)pentyl]-2-imidazolidinone, 1-[3-(dibromohydroxysilyl)pentyl]-2-imidazolidinone, 1-[3-(bromohydroxymethylsilyl)pentyl]-2-imidazolidinone, 1-[3-(bromodihydroxysilyl)hexyl]-2-imidazolidinone, 1-[3-(dibromohydroxysilyl)hexyl]-2-imidazolidinone, 1-[3-(bromohydroxymethylsilyl)hexyl]-2-imidazolidinone, 1-[3-(bromodihydroxysilyl)heptyl]-2-imidazolidinone, 1-[3-(dibromohydroxysilyl)heptyl]-2-imidazolidinone, 1-[3-(bromohydroxymethylsilyl)heptyl]-2-imidazolidinone, 1-[3-(bromodihydroxysilyl)octyl]-2-imidazolidinone, 1-[3-(dibromohydroxysilyl)octyl]-2-imidazolidinone, 1-[3-(bromohydroxymethylsilyl)octyl]-2-imidazolidinone; iodosilanol compounds such as 1-[3-(iododihydroxysilyl)methyl]-2-imidazolidinone, 1-[3-(diiodohydroxysilyl)methyl]-2-imidazolidinone, 1-[3-(iodohydroxymethylsilyl)methyl]-2-imidazolidinone, 1-[3-(iododihydroxysilyl)ethyl]-2-imidazolidinone, 1-[3-(diiodohydroxysilyl)ethyl]-2-imidazolidinone, 1-[3-(iodohydroxymethylsilyl)ethyl]-2-imidazolidinone, 1-[3-(iododihydroxysilyl)propyl]-2-imidazolidinone, 1-[3-(diiodohydroxysilyl)propyl]-2-imidazolidinone, 1-[3-(iodohydroxymethylsilyl)propyl]-2-imidazolidinone, 1-[3-(iododihydroxysilyl)butyl]-2-imidazolidinone, 1-[3-(diiodohydroxysilyl)butyl]-2-imidazolidinone, 1-[3-(iodohydroxymethylsilyl)butyl]-2-imidazolidinone, 1-[3-(iododihydroxysilyl)pentyl]-2-imidazolidinone, 1-[3-(diiodohydroxysilyl)pentyl]-2-imidazolidinone, 1-[3-(iodohydroxymethylsilyl)pentyl]-2-imidazolidinone, 1-[3-(iododihydroxysilyl)hexyl]-2-imidazolidinone, 1-[3-(diiodohydroxysilyl)hexyl]-2-imidazolidinone, 1-[3-(iodohydroxymethylsilyl)hexyl]-2-imidazolidinone, 1-[3-(iododihydroxysilyl)heptyl]-2-imidazolidinone, 1-[3-(diiodohydroxysilyl)heptyl]-2-imidazolidinone, 1-[3-(iodohydroxymethylsilyl)heptyl]-2-imidazolidinone, 1-[3-(iododihydroxysilyl)octyl]-2-imidazolidinone, 1-[3-(diiodohydroxysilyl)octyl]-2-imidazolidinone, 1-[3-(iodohydroxymethylsilyl)octyl]-2-imidazolidinone, and the like.

Among them, particularly when used as a silane coupling agent and a surface treatment agent, from the viewpoint of reacting with a plurality of hydroxyl groups on the surface of the substrate to enhance adhesion, 1-[3-(trihydroxysilyl)methyl]-2-imidazolidinone, 1-[3-(dihydroxymethylsilyl)methyl]-2-imidazolidinone, 1-[3-(trihydroxysilyl)ethyl]-2-imidazolidinone, 1-[3-(dihydroxymethylsilyl)ethyl]-2-imidazolidinone, 1-[3-(trihydroxysilyl)propyl]-2-imidazolidinone, 1-[3-(dihydroxymethylsilyl)propyl]-2-imidazolidinone, 1-[3-(trihydroxysilyl)butyl]-2-imidazolidinone, 1-[3-(dihydroxymethylsilyl)butyl]-2-imidazolidinone, 1-[3-(trihydroxysilyl)pentyl]-2-imidazolidinone, 1-[3-(dihydroxymethylsilyl)pentyl]-2-imidazolidinone, 1-[3-(trihydroxysilyl)hexyl]-2-imidazolidinone, 1-[3-(dihydroxymethylsilyl)hexyl]-2-imidazolidinone are preferable, 1-[3-(trihydroxysilyl)methyl]-2-imidazolidinone, 1-[3-(trihydroxysilyl)ethyl]-2-imidazolidinone, 1-[3-(trihydroxysilyl)propyl]-2-imidazolidinone, 1-[3-(trihydroxysilyl)butyl]-2-imidazolidinone, 1-[3-(trihydroxysilyl)pentyl]-2-imidazolidinone, 1-[3-(trihydroxysilyl)hexyl]-2-imidazolidinone are particularly preferable.

The content of the compound (1) in the aqueous composition is not particularly limited as long as it is an amount that enhances adhesion by reacting with a plurality of hydroxyl groups on the surface of the substrate when used as a silane coupling agent, a surface treatment agent, or the like, but is preferably in the range of 0.0001 to 99 wt%, more preferably 0.01 to 99 wt%, and still more preferably 1 to 99 wt% with respect to the aqueous composition from the viewpoint of productivity.

The condensate of the compound (1) in the aqueous composition is a compound in which hydroxyl groups are dehydration-condensed between molecules of the compound (1).

Specific examples of the condensate of the compound (1) include linear, branched, cyclic, and three-dimensional network polysiloxanes such as disiloxane, trisiloxane, tetrasiloxane, pentasiloxane, hexasiloxane, heptasiloxane, octasiloxane, nonasiloxane, and decasiloxane.

Specific examples of the polysiloxane include disiloxanes such as 1,1,3,3-tetrahydroxy-1,3-bis[3-(2-imidazolidino)methyl]-disiloxane, 1,3-dihydroxy-1,3-bis[3-(2-imidazolidino)methyl]-1,3-dimethyldisiloxane, 1, 1,3,3-tetrahydroxy-1,3-bis[3-(2-imidazolidino)ethyl]-disiloxane, 1,3-dihydroxy-1,3-bis[3-(2-imidazolidino)ethyl]-1,3-dimethyldisiloxane, 1, 1,3,3-tetrahydroxy-1,3-bis[3-(2-imidazolidino)propyl]-disiloxane, 1,3-dihydroxy-1,3-bis[3-(2-imidazolidino)propyl]-1,3-dimethyldisiloxane, 1, 1,3,3-tetrahydroxy-1,3-bis[3-(2-imidazolidino)butyl]-disiloxane, 1,3-dihydroxy-1,3-bis[3-(2-imidazolidino)butyl]-1,3-dimethyldisiloxane, 1, 1,3,3-tetrahydroxy-1,3-bis[3-(2-imidazolidino)pentyl]-disiloxane, 1,3-dihydroxy-1,3-bis[3-(2-imidazolidino)pentyl]-1,3-dimethyldisiloxane, 1, 1,3,3-tetrahydroxy-1,3-bis[3-(2-imidazolidino)hexyl]-disiloxane, 1,3-dihydroxy-1,3-bis[3-(2-imidazolidino)hexyl]-1,3-dimethyldisiloxane, 1, 1,3,3-tetrahydroxy-1,3-bis[3-(2-imidazolidino)heptyl]-disiloxane, 1,3-dihydroxy-1,3-bis[3-(2-imidazolidino)heptyl]-1,3-dimethyldisiloxane, 1, 1,3,3-tetrahydroxy-1,3-bis[3-(2-imidazolidino)octyl]-disiloxane, 1,3-dihydroxy-1,3-bis[3-(2-imidazolidino)octyl]-1,3-dimethyldisiloxane; trisiloxanes such as 1,1,3,5,5-pentahydroxy-1,3,5-tris[3-(2-imidazolidino)methyl]-trisiloxane, 1,3,5-tiihydroxy-1,3,5-tris[3-(2-imidazolidino)methyl]-1,3,5-trimethyltrisiloxane, 1, 1,3,5,5-pentahydroxy-1,3,5-tris[3-(2-imidazolidino)ethyl]-trisiloxane, 1,3,5-tiihydroxy-1,3,5-tris[3-(2-imidazolidino)ethyl]-1,3,5-trimethyltrisiloxane, 1,1,3,5,5-pentahydroxy-1,3,5-tris[3-(2-imidazolidino)propyl]-trisiloxane, 1,3, 5-trihydroxy-1,3, 5-tri s[3-(2-imidazolidino)propyl]-1,3, 5-trimethyltrisiloxane, 1, 1,3,5,5-pentahydroxy-1,3,5-tris[3-(2-imidazolidino)butyl]-trisiloxane, 1,3,5-tiihydroxy-1,3,5-tris[3-(2-imidazolidino)butyl]-1,3,5-trimethyltrisiloxane, 1, 1,3,5,5-pentahydroxy-1,3,5-tris[3-(2-imidazolidino)pentyl]-trisiloxane, 1,3,5-trihydroxy-1,3,5-tris[3-(2-imidazolidino)pentyl]-1,3,5-trimethyltrisiloxane, 1,1,3,5,5-pentahydroxy-1,3,5-tris[3-(2-imidazolidino)hexyl]-trisiloxane, 1,3, 5-trihydroxy-1,3, 5-tri s[3-(2-imidazolidino)hexyl]-1,3, 5-trimethyltrisiloxane, 1,1,3,5,5-pentahydroxy-1,3,5-tris[3-(2-imidazolidino)heptyl]-trisiloxane, 1,3,5-trihydroxy-1,3,5-tris[3-(2-imidazolidino)heptyl]-1,3,5-trimethyltrisiloxane, 1,1,3,5,5-pentahydroxy-1,3,5-tris[3-(2-imidazolidino)octyl]-trisiloxane, 1,3, 5-trihydroxy-1,3, 5-tri s[3-(2-imidazolidino)octyl]-1,3, 5-trimethyltrisiloxane, 1,3, 5-trihydroxy-1,3, 5-tri s[3-(2-imidazolidino)methyl]-cyclotri siloxane, 1,3, 5-trihydroxy-1,3, 5-tri s[3-(2-imidazolidino)ethyl]-cyclotri siloxane, 1,3, 5-trihydroxy-1,3, 5-tri s[3-(2-imidazolidino)propyl]-cyclotrisiloxane, 1,3, 5-trihydroxy-1,3, 5-tri s[3-(2-imidazolidino)butyl]-cyclotri siloxane, 1,3, 5-trihydroxy-1,3, 5-tri s[3-(2-imidazolidino)pentyl]-cyclotrisiloxane, 1,3, 5-trihydroxy-1,3, 5-tri s[3-(2-imidazolidino)hexyl]-cyclotri siloxane, 1,3, 5-trihydroxy-1,3, 5-tri s[3-(2-imidazolidino)heptyl]-cyclotrisiloxane, 1,3,5-trihydroxy-1,3,5-tris[3-(2-imidazolidino)octyl]-cyclotrisiloxane, 1,3,5-trimethyl-1,3,5-tris[3-(2-imidazolidino)methyl]-cyclotrisiloxane, 1,3,5-trimethyl-1,3,5-tris[3-(2-imidazolidino)ethyl]-cyclotrisiloxane, 1,3,5-trimethyl-1,3,5-tris[3-(2-imidazolidino)propyl]-cyclotrisiloxane, 1,3,5-trimethyl-1,3,5-tris[3-(2-imidazolidino)butyl]-cyclotrisiloxane, 1,3,5-trimethyl-1,3,5-tris[3-(2-imidazolidino)pentyl]-cyclotrisiloxane, 1,3,5-trimethyl-1,3,5-tris[3-(2-imidazolidino)hexyl]-cyclotrisiloxane, 1,3,5-trimethyl-1,3,5-tris[3-(2-imidazolidino)heptyl]-cyclotrisiloxane, 1,3,5-trimethyl-1,3,5-tris[3-(2-imidazolidino)octyl]-cyclotrisiloxane; tetrasiloxanes such as 1,3,5,7-tetrahydroxy-1,3,5,7-tetra[3-(2-imidazolidino)methyl]-cyclotetrasiloxane, 1,3,5,7-tetrahydroxy-1,3,5,7-tetra[3-(2-imidazolidino)ethyl]-cyclotetrasiloxane, 1,3,5,7-tetrahydroxy-1,3,5,7-tetra[3-(2-imidazolidino)propyl]-cyclotetrasiloxane, 1,3,5,7-tetrahydroxy-1,3,5,7-tetra[3-(2-imidazolidino)butyl]-cyclotetrasiloxane, 1,3,5,7-tetrahydroxy-1,3,5,7-tetra[3-(2-imidazolidino)pentyl]-cyclotetrasiloxane, 1,3,5,7-tetrahydroxy-1,3,5,7-tetra[3-(2-imidazolidino)hexyl]-cyclotetrasiloxane, 1,3, 5,7-tetrahydroxy-1,3, 5,7-tetra[3-(2-imidazolidino)heptyl]-cyclotetrasiloxane, 1,3, 5,7-tetrahydroxy-1,3, 5,7-tetra[3-(2-imidazolidino)octyl]-cyclotetrasiloxane, 1,3,5,7-tetramethyl-1,3,5,7-tetra[3-(2-imidazolidino)methyl]-cyclotetrasiloxane, 1,3,5,7-tetramethyl-1,3,5,7-tetra[3-(2-imidazolidino)ethyl]-cyclotetrasiloxane, 1,3,5,7-tetramethyl-1,3,5,7-tetra[3-(2-imidazolidino)propyl]-cyclotetrasiloxane, 1,3,5,7-tetramethyl-1,3,5,7-tetra[3-(2-imidazolidino)butyl]-cyclotetrasiloxane, 1,3,5,7-tetramethyl-1,3,5,7-tetra[3-(2-imidazolidino)pentyl]-cyclotetrasiloxane, 1,3,5,7-tetramethyl-1,3,5,7-tetra[3-(2-imidazolidino)hexyl]-cyclotetrasiloxane, 1,3,5,7-tetramethyl-1,3,5,7-tetra[3-(2-imidazolidino)heptyl]-cyclotetrasiloxane, 1,3,5,7-tetramethyl-1,3,5,7-tetra[3-(2-imidazolidino)octyl]-cyclotetrasiloxane; 1,1,3,5,7,9,9-heptahydroxy-1,3,5,7,9-pentakis[3-(2-imidazolidino)methyl]-pentasiloxane; 1,1,3,5,7,9,11,11-octahydroxy-1,3,5,7,9,11-hexakis[3-(2-imidazolidino)methyl]-hexasiloxane; 1,1,3,5,7,9,11,13,13-nonahydroxy-1,3,5,7,9,11,13-heptakis[3-(2-imidazolidino)methyl]-heptasiloxane; 1,1,3,5,7,9,11,13,15,15-decahydroxy-1,3,5,7,9,11,13,15-octakis[3-(2-imidazolidino)methyl]-octasiloxane; 1,1,3,5,7,9,11,13,15,17,17-undecahydroxy-1,3,5,7,9,11,13,15,17-nonakis[3-(2-imidazolidino)methyl]-nonasiloxane; 1,1,3,5,7,9,11,13,15,17,19,19-dodecahydroxy-1,3,5,7,9,11,13,15,17,19-decakis[3-(2-imidazolidino)methyl]-decasiloxane; [3-(2-imidazolidino)methyl]-polysiloxane, [3-(2-imidazolidino)methyl]-polycyclosiloxane and the like.

In addition, the content of the condensate of the compound (1) in the aqueous composition is not particularly limited as long as it is an amount that enhances adhesion by reacting with a plurality of hydroxyl groups on the surface of the substrate when used as a silane coupling agent, a surface treatment agent, or the like, but is preferably in the range of 0.0001 to 99 wt%, more preferably 0.01 to 99 wt%, and still more preferably 1 to 99 wt% with respect to the aqueous composition from the viewpoint of productivity.

The aqueous composition of the present invention may contain water depending on the added amount of water used in the preparation of the aqueous composition described later. Specifically, since the alkoxy group of the imidazolidinone silane compound of the general formula (2) (hereinafter, the compound is referred to as "compound (2)".) reacts with an equivalent amount of water, water exceeding the equivalent amount is contained.

In addition, the aqueous composition inevitably contains an alcohol generated corresponding to the alkoxy group of the compound (2) in the hydrolysis reaction.

Specific examples of the alcohol include monohydric alcohols such as methyl alcohol, ethyl alcohol, n-propyl alcohol, sec-propyl alcohol, n-butyl alcohol, sec-butyl alcohol, tert-butyl alcohol, phenol, and benzyl alcohol; dihydric alcohols such as 1,2-ethanediol, 1,2-propanediol, 1,3-propanediol, 1,2-butanediol, 1,3-butanediol, 1,4-butanediol, and 2,3-butanediol.

The content of the alcohol contained in the aqueous composition is in the range of less than 5 wt%, preferably 0.0001 to 2.5 wt%, more preferably 0.0001 to 1.5 wt%, and still more preferably 0.0001 to 1.0 wt%, with respect to the compound (1) and the condensate thereof, from the viewpoint of environmental load.

The method for measuring the contents of the compound (1), the condensate thereof, and the alcohol in the aqueous composition is not particularly limited, and analytical means such as gas chromatography, high performance liquid chromatography, thin layer chromatography, nuclear magnetic resonance spectroscopy (NMR), infrared spectroscopy (IR), and near infrared spectroscopy (NIR) can be employed.

The aqueous composition of the present invention can also be diluted with a solvent and used as long as the effect of the present invention is not impaired.

Specific examples of the solvent include ketone-based solvents such as acetone and methyl isobutyl ketone; ether-based solvent such as diethyl ether, tetrahydrofuran, or dioxane; ester-based solvents such as ethyl acetate and butyl acetate; aprotic polar solvents such as acetonitrile and N,N-dimethylformamide, and these solvents may be used alone or in combination of two or more. As the pH adjusting agent, an acid or a base may be used.

The aqueous composition of the present invention can also be purified and used by a method selected from extraction, liquid separation, filtration, recrystallization, distillation, sublimation, chromatography, solid adsorption, and the like as long as the effect of the present invention is not impaired.

The aqueous composition of the present invention can also be used as a composition containing one or more other additives selected from a pigment, an antifoaming agent, a lubricant, a preservative, a pH adjusting agent, a film forming agent, an antistatic agent, an antibacterial agent, a surfactant, a dye, and the like as long as the effect of the present invention is not impaired.

Next, a method for producing the aqueous composition of the present invention will be described.

In the present invention, an aqueous composition containing the compound (1) and a condensate thereof is produced by performing a hydrolysis reaction between the compound (2) and water and removing generated alcohol. 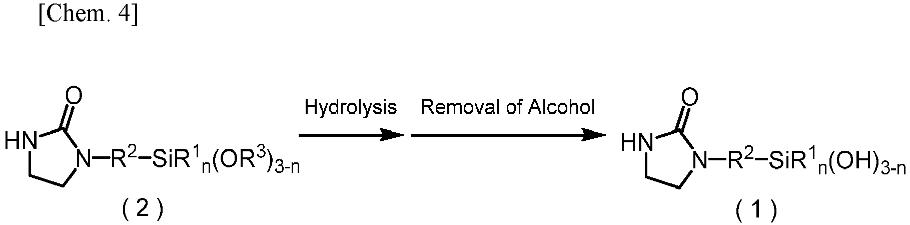 wherein, R¹, R² and n represent the same meaning as described above.

In the general formula (2), R³ represents a substituted or unsubstituted monovalent hydrocarbon group having 1 to 10 carbon atoms, preferably 1 to 8 carbon atoms, more preferably 1 to 3 carbon atoms, and still more preferably 1 to 2 carbon atoms.

The monovalent hydrocarbon group may be linear, branched, or cyclic, and specific examples thereof include a linear alkyl group such as methyl, ethyl, n-propyl, n-butyl, n-pentyl, n-hexyl, n-heptyl, n-octyl, n-nonyl, and n-decyl groups; a branched alkyl group such as sec-propyl, sec-butyl, tert-butyl, sec-pentyl, tert-pentyl, sec-hexyl, tert-hexyl, sec-heptyl, tert-heptyl, sec-octyl, tert-octyl, sec-nonyl, tert-nonyl, sec-decyl, and tert-decyl groups; a cyclic alkyl group such as cyclopentyl and cyclohexyl groups; an alkenyl group such as vinyl, allyl, butenyl, and methallyl groups; an aryl group such as phenyl, tolyl, and xylyl groups; aralkyl group such as benzyl and phenethyl groups, and the like.

Among them, R³ is preferably an unsubstituted linear alkyl group having 1 to 6 carbon atoms, and more preferably a methyl group or an ethyl group particularly from the viewpoint of availability.

Some or all of the hydrogen atoms of these monovalent hydrocarbon groups may be substituted with other substituents, and specific examples of this substituent include an alkoxy group having 1 to 3 carbon atoms such as methoxy, ethoxy, and (iso)propoxy groups; a halogen atom such as fluorine, chlorine, and bromine; an aromatic hydrocarbon group such as phenyl group; a cyano group, an amino group, an ester group, an ether group, a carbonyl group, an acyl group, and a sulfide group, and one or two or more can be used in combination. Substitution positions of these substituents are not particularly limited, and the number of substituents is also not limited.

Specific examples of the compound (2) include 1-[3-(trimethoxysilyl)methyl]-2-imidazolidinone, 1-[3-(dimethoxymethylsilyl)methyl]-2-imidazolidinone, 1-[3-(methoxydimethylsilyl)methyl]-2-imidazolidinone, 1-[3-(trimethoxysilyl)ethyl]-2-imidazolidinone, 1-[3-(dimethoxymethylsilyl)ethyl]-2-imidazolidinone, 1-[3-(methoxydimethylsilyl)ethyl]-2-imidazolidinone, 1-[3-(trimethoxysilyl)propyl]-2-imidazolidinone, 1-[3-(dimethoxymethylsilyl)propyl]-2-imidazolidinone, 1-[3-(methoxydimethylsilyl)propyl]-2-imidazolidinone, 1-[3-(trimethoxysilyl)butyl]-2-imidazolidinone, 1-[3-(dimethoxymethylsilyl)butyl]-2-imidazolidinone, 1-[3-(methoxydimethylsilyl)butyl]-2-imidazolidinone, 1-[3-(trimethoxysilyl)pentyl]-2-imidazolidinone, 1-[3-(dimethoxymethylsilyl)pentyl]-2-imidazolidinone, 1-[3-(methoxydimethylsilyl)pentyl]-2-imidazolidinone, 1-[3-(trimethoxysilyl)hexyl]-2-imidazolidinone, 1-[3-(dimethoxymethylsilyl)hexyl]-2-imidazolidinone, 1-[3-(methoxydimethylsilyl)hexyl]-2-imidazolidinone, 1-[3-(trimethoxysilyl)heptyl]-2-imidazolidinone, 1-[3-(dimethoxymethylsilyl)heptyl]-2-imidazolidinone, 1-[3-(methoxydimethylsilyl)heptyl]-2-imidazolidinone, 1-[3-(trimethoxysilyl)octyl]-2-imidazolidinone, 1-[3-(dimethoxymethylsilyl)octyl]-2-imidazolidinone, 1-[3-(methoxydimethylsilyl)octyl]-2-imidazolidinone, 1-[3-(triethoxysilyl)methyl]-2-imidazolidinone, 1-[3-(diethoxymethylsilyl)methyl]-2-imidazolidinone, 1-[3-(ethoxydimethylsilyl)methyl]-2-imidazolidinone, 1-[3-(triethoxysilyl)ethyl]-2-imidazolidinone, 1-[3-(diethoxymethylsilyl)ethyl]-2-imidazolidinone, 1-[3-(ethoxydimethylsilyl)ethyl]-2-imidazolidinone, 1-[3-(triethoxysilyl)propyl]-2-imidazolidinone, 1-[3-(diethoxymethylsilyl)propyl]-2-imidazolidinone, 1-[3-(ethoxydimethylsilyl)propyl]-2-imidazolidinone, 1-[3-(triethoxysilyl)butyl]-2-imidazolidinone, 1-[3-(diethoxymethylsilyl)butyl]-2-imidazolidinone, 1-[3-(ethoxydimethylsilyl)butyl]-2-imidazolidinone, 1-[3-(triethoxysilyl)pentyl]-2-imidazolidinone, 1-[3-(diethoxymethylsilyl)pentyl]-2-imidazolidinone, 1-[3-(ethoxydimethylsilyl)pentyl]-2-imidazolidinone, 1-[3-(triethoxysilyl)hexyl]-2-imidazolidinone, 1-[3-(diethoxymethylsilyl)hexyl]-2-imidazolidinone, 1-[3-(ethoxydimethylsilyl)hexyl]-2-imidazolidinone, 1-[3-(triethoxysilyl)heptyl]-2-imidazolidinone, 1-[3-(diethoxymethylsilyl)heptyl]-2-imidazolidinone, 1-[3-(ethoxydimethylsilyl)heptyl]-2-imidazolidinone, 1-[3-(triethoxysilyl)octyl]-2-imidazolidinone, 1-[3-(diethoxymethylsilyl)octyl]-2-imidazolidinone, 1-[3-(ethoxydimethylsilyl)octyl]-2-imidazolidinone, 1-[3-(tripropoxysilyl)methyl]-2-imidazolidinone, 1-[3-(dipropoxymethylsilyl)methyl]-2-imidazolidinone, 1-[3-(propoxydimethylsilyl)methyl]-2-imidazolidinone, 1-[3-(tripropoxysilyl)ethyl]-2-imidazolidinone, 1-[3-(dipropoxymethylsilyl)ethyl]-2-imidazolidinone, 1-[3-(propoxydimethylsilyl)ethyl]-2-imidazolidinone, 1-[3-(tripropoxysilyl)propyl]-2-imidazolidinone, 1-[3-(dipropoxymethylsilyl)propyl]-2-imidazolidinone, 1-[3-(propoxydimethylsilyl)propyl]-2-imidazolidinone, 1-[3-(tripropoxysilyl)butyl]-2-imidazolidinone, 1-[3-(dipropoxymethylsilyl)butyl]-2-imidazolidinone, 1-[3-(propoxydimethylsilyl)butyl]-2-imidazolidinone, 1-[3-(tripropoxysilyl)pentyl]-2-imidazolidinone, 1-[3-(dipropoxymethylsilyl)pentyl]-2-imidazolidinone, 1-[3-(propoxydimethylsilyl)pentyl]-2-imidazolidinone, 1-[3-(tripropoxysilyl)hexyl]-2-imidazolidinone, 1-[3-(dipropoxymethylsilyl)hexyl]-2-imidazolidinone, 1-[3-(propoxydimethylsilyl)hexyl]-2-imidazolidinone, 1-[3-(tripropoxysilyl)heptyl]-2-imidazolidinone, 1-[3-(dipropoxymethylsilyl)heptyl]-2-imidazolidinone, 1-[3-(propoxydimethylsilyl)heptyl]-2-imidazolidinone, 1-[3-(tripropoxysilyl)octyl]-2-imidazolidinone, 1-[3-(dipropoxymethylsilyl)octyl]-2-imidazolidinone, 1-[3-(propoxydimethylsilyl)octyl]-2-imidazolidinone and the like.

Among them, particularly from the viewpoint of availability, 1-[3-(trimethoxysilyl)methyl]-2-imidazolidinone, 1-[3-(dimethoxymethylsilyl)methyl]-2-imidazolidinone, 1-[3-(trimethoxysilyl)ethyl]-2-imidazolidinone, 1-[3-(dimethoxymethylsilyl)ethyl]-2-imidazolidinone, 1-[3-(trimethoxysilyl)propyl]-2-imidazolidinone, 1-[3-(dimethoxymethylsilyl)propyl]-2-imidazolidinone, 1-[3-(trimethoxysilyl)butyl]-2-imidazolidinone, 1-[3-(dimethoxymethylsilyl)butyl]-2-imidazolidinone, 1-[3-(trimethoxysilyl)pentyl]-2-imidazolidinone, 1-[3-(dimethoxymethylsilyl)pentyl]-2-imidazolidinone, 1-[3-(trimethoxysilyl)hexyl]-2-imidazolidinone, 1-[3-(dimethoxymethylsilyl)hexyl]-2-imidazolidinone, 1-[3-(triethoxysilyl)methyl]-2-imidazolidinone, 1-[3-(diethoxymethylsilyl)methyl]-2-imidazolidinone, 1-[3-(triethoxysilyl)ethyl]-2-imidazolidinone, 1-[3-(diethoxymethylsilyl)ethyl]-2-imidazolidinone, 1-[3-(triethoxysilyl)propyl]-2-imidazolidinone, 1-[3-(diethoxymethylsilyl)propyl]-2-imidazolidinone, 1-[3-(triethoxysilyl)butyl]-2-imidazolidinone, 1-[3-(diethoxymethylsilyl)butyl]-2-imidazolidinone, 1-[3-(triethoxysilyl)pentyl]-2-imidazolidinone, 1-[3-(diethoxymethylsilyl)pentyl]-2-imidazolidinone, 1-[3-(triethoxysilyl)hexyl]-2-imidazolidinone, 1-[3-(diethoxymethylsilyl)hexyl]-2-imidazolidinone are preferable, and 1-[3-(trimethoxysilyl)methyl]-2-imidazolidinone, 1-[3-(trimethoxysilyl)ethyl]-2-imidazolidinone, 1-[3-(trimethoxysilyl)propyl]-2-imidazolidinone, 1-[3-(trimethoxysilyl)butyl]-2-imidazolidinone, 1-[3-(trimethoxysilyl)pentyl]-2-imidazolidinone, 1-[3-(trimethoxysilyl)hexyl]-2-imidazolidinone, 1-[3-(triethoxysilyl)methyl]-2-imidazolidinone, 1-[3-(triethoxysilyl)ethyl]-2-imidazolidinone, 1-[3-(triethoxysilyl)propyl]-2-imidazolidinone, 1-[3-(triethoxysilyl)butyl]-2-imidazolidinone, 1-[3-(triethoxysilyl)pentyl]-2-imidazolidinone, 1-[3-(triethoxysilyl)hexyl]-2-imidazolidinone are particularly preferable.

The water used in the hydrolysis reaction is not particularly limited as long as it is water that can be used when used as a silane coupling agent, a surface treatment agent, or the like, and tap water, groundwater, river water, rainwater, natural water, agricultural water, industrial water, purified water, distilled water, ion-exchanged water, pure water, or the like can be used. Among them, purified water, distilled water, ion-exchanged water, pure water, and the like are preferable from the viewpoint of a small amount of impurities.

The amount of water used in the hydrolysis reaction is not particularly limited as long as the hydrolysis reaction proceeds, but is preferably 3 to 100,000 mol, more preferably 3 to 1,000 mol, and still more preferably 3 to 100 mol with respect to 1 mol of silicon atoms of the compound (2), from the viewpoint of reactivity and productivity.

The hydrolysis reaction is not particularly limited as long as the compound (2) and water can be mixed, and either a method of adding the compound (2) to water or a method of adding water to the compound (2) may be used, but a method of adding the compound (2) to water is preferable from the viewpoint of productivity in which the hydrolysis reaction proceeds smoothly. In addition, examples of the method of adding the compound (2) into water include a method of adding the compound (2) into water and a method of dropping the compound (2) onto a water surface, and the method of adding or dropping the compound (2) may be either continuous or intermittent.

The temperature in the hydrolysis reaction is preferably in the range of 0 to 100°C, more preferably 5 to 100°C, and still more preferably 10 to 100°C from the viewpoint of reactivity and productivity.

The time in the hydrolysis reaction is preferably in the range of 0.1 to 30 hours, more preferably 0.5 to 20 hours, and still more preferably 1 to 10 hours from the viewpoint of reactivity and productivity.

The pressure in the hydrolysis reaction is preferably in the range of 0.01 to 101.3 kPa, more preferably 0.1 to 101.3 kPa, and still more preferably 1 to 101.3 kPa from the viewpoint of reactivity and productivity.

The hydrolysis reaction proceeds even without a solvent, but a solvent can also be used. Examples of the solvent include a hydrocarbon solvent such as pentane, hexane, cyclohexane, heptane, isooctane, benzene, toluene, and xylene; a ketone-based solvent such as acetone and methyl isobutyl ketone; an alcohol-based solvent such as methyl alcohol and ethyl alcohol; an ether-based solvent such as diethyl ether, tetrahydrofuran, or dioxane; an ester-based solvent such as ethyl acetate and butyl acetate; an aprotic polar solvent such as acetonitrile, N,N-dimethylformamide; a chlorinated hydrocarbon-based solvent such as dichloromethane and chloroform, and these solvents may be used alone or in combination of two or more. As the pH adjusting agent, an acid or a base may be used.

Among them, an alcohol-based solvent, an ether-based solvent, an ester-based solvent, and an aprotic polar solvent are particularly preferable from the viewpoint of compatibility with the compound (2).

By the hydrolysis reaction between the compound (2) and water, hydrolysis proceeds, and the compound (1) and a condensate thereof are produced, and at the same time, an alcohol is produced.

In the present invention, the alcohol generated by the hydrolysis reaction can be removed during or after mixing of the compound (2) and water.

The method for removing alcohol is not particularly limited, and examples thereof include extraction, liquid separation, filtration, recrystallization, distillation, sublimation, chromatography, and chemical conversion, and among these, distillation is preferable from the viewpoint of productivity.

The conditions for removing the alcohol by distillation are not particularly limited as long as the volatile alcohol is vaporized.

The distillation temperature is preferably in the range of 0 to 300°C, more preferably 5 to 280°C, and still more preferably 10 to 260°C from the viewpoint of productivity.

From the viewpoint of productivity, the distillation time is preferably in the range of 1 to 50 hours, more preferably 1 to 30 hours, and still more preferably 1 to 10 hours.

The distillation pressure is preferably in the range of 0.01 to 101.3 kPa, more preferably 0.1 to 101.3 kPa, and still more preferably 1 to 101.3 kPa from the viewpoint of productivity.

In the production method of the present invention, the generated alcohol can be removed until the content thereof with respect to the compound (1) and the condensate thereof becomes less than 5 wt%, so that the load on the environment can be significantly reduced when the obtained aqueous composition is used as a silane coupling agent, a surface treatment agent, or the like.

By subjecting the substrate to a silane coupling treatment or a surface treatment using the aqueous composition of the present invention, the adhesion of the organic-inorganic composite material after the treatment can be improved. Hereinafter, a method for treating a substrate using the aqueous composition of the present invention will be described.

The method for treating the substrate using the aqueous composition of the present invention is not particularly limited, and examples thereof include a method in which the aqueous composition is applied to the substrate, a method in which the aqueous composition is entrained with an inert gas, and the substrate is brought into contact with the entrained gas, and a method in which the aqueous composition is directly mixed with the substrate with a mixer or a mill. Among them, the method of applying the aqueous composition is preferable from the viewpoint of convenience.

Examples of the method of applying the aqueous composition include a brush coating method, a spray coating method, a wire bar method, a blade method, a roll coating method, and a dipping method.

The conditions for treating a substrate by coating, contacting or mixing the substrate with the aqueous composition of the present invention are not particularly limited as long as the conditions are conditions in which the silanol group reacts with the hydroxyl group on the surface of the substrate.

From the viewpoint of productivity, the treatment temperature is preferably in the range of 0 to 100°C, more preferably 10 to 50°C, and still more preferably 20 to 30°C.

From the viewpoint of productivity, the treatment time is preferably in the range of 1 minute to 10 hours, more preferably 1 minute to 5 hours, and still more preferably 1 minute to 2 hours, but may be appropriately set in relation to the treatment temperature.

The substrate to be treated may be either an inorganic material or an organic material.

Examples of the inorganic material include silicon compounds such as glass plates, glass fibers, diatomaceous earth, calcium silicate, silica, silicon, talc, and mica; metal oxides such as zinc oxide, aluminum oxide, tin oxide, titanium oxide, iron oxide, and magnesium oxide; metal chlorides such as zinc chloride, aluminum chloride, tin chloride, titanium chloride, iron chloride, and magnesium chloride; metal hydroxides such as aluminum hydroxide and magnesium hydroxide; carbonates such as calcium carbonate, zinc carbonate, and magnesium carbonate. Among them, a silicon compound and a metal oxide are particularly preferable from the viewpoint of reactivity with the silanol group of the imidazolidinone silane compound.

Examples of the organic material include natural polymers such as rubber, paper, and cellulose; synthetic polymers such as an acrylic resin, a urethane resin, an epoxy resin, and a phenol resin; fats and oils, surfactants, and liquid crystals. Among them, natural polymers and synthetic polymers are particularly preferable from the viewpoint of reactivity of the imidazolidinone silane compound with the imidazolidinone group.

After the substrate is treated using the aqueous composition of the present invention, excess aqueous composition is removed by washing, drying, or the like. The post-treatment by washing and drying may be performed alone or in combination.

The washing solvent is not particularly limited, but water or the same solvent as the solvent exemplified for the solvent for diluting the aqueous composition can be used.

The washing method is not particularly limited, but a method of immersing the treated substrate in a washing solvent, a method of spraying a washing solvent, or the like can be employed.

Conditions for washing and drying are not particularly limited as long as the substrate after treatment is not adversely affected.

The washing temperature is preferably in the range of 0 to 300°C, more preferably 0 to 200°C, and still more preferably 0 to 100°C from the viewpoint of productivity.

From the viewpoint of productivity, the washing time is preferably in the range of 1 minute to 10 hours, more preferably 1 minute to 5 hours, and still more preferably 1 minute to 2 hours, but may be appropriately set in relation to the washing temperature.

The drying temperature is preferably in the range of 0 to 300°C, more preferably 0 to 200°C, and still more preferably 0 to 100°C from the viewpoint of productivity.

From the viewpoint of productivity, the drying time is preferably in the range of 1 minute to 10 hours, more preferably 1 minute to 5 hours, and still more preferably 1 minute to 2 hours, but may be appropriately set in relation to the drying temperature.

### EXAMPLES

Hereinafter, the present invention will be described more specifically with reference to Examples, Comparative Examples, and Application Examples, but the present invention is not limited to the following Examples.

The content of the residual alcohol was measured by gas chromatography measurement under the following conditions. In addition, the nonvolatile content is a measured value by a heating residual amount method after heating and drying at 105°C for 3 hours on an aluminum petri dish.

### [Gas Chromatography Measurement Conditions]

| | |
|---|---|
| Gas chromatograph: | GC -2014 (manufactured by Shimadzu Corporation) |
| Packed column: | Silicone SE-30 (manufactured by GL Sciences Inc.) |
| Detector: | TCD |
| Detector temperature: | 300°C |
| Inlet temperature: | 300°C |
| Temperature raising program: | 70°C (0 min) → 10°C/min → 300°C (10 min) |
| Carrier gas: | Helium (50 ml/min) |
| Injection volume: | 1 µl |

### [1] Preparation of Aqueous Composition Containing Compound (1) and Condensate Thereof

### [Example 1] Preparation of aqueous composition containing 1-[3-(trihydroxysilyl)propyl]-2-imidazolidinone and condensate thereof

A flask equipped with a stirrer, a reflux condenser, a Dean-Stark, a dropping funnel, and a thermometer was charged with 54.0 g (3.000 mol) of pure water at room temperature, and heated to 60°C. After the internal temperature was stabilized, 24.8 g (0.100 mol) of 1-[3-(trimethoxysilyl)propyl]-2-imidazolidinone was added dropwise over 5 hours. The mixture was stirred at 60°C for 1 hour under normal pressure, then generated methanol was extracted while heating, and heating was stopped when the tower summit temperature reached 100°C. After cooling to room temperature, pure water was added so that the nonvolatile content was 25 to 26 wt% to prepare a colorless, transparent aqueous composition.

When the prepared aqueous composition was analyzed by gas chromatography (internal standard method), it was determined that the ratio of the area% of residual methanol and silanol compound (total of 1-[3-(trihydroxysilyl)propyl]-2-imidazolidinone and silanol condensate thereof) was 0.3:99.7. Further, when heated and dried at 105°C for 3 hours in a hot air oven, the nonvolatile content was 25 wt%.

Even after leaving this aqueous composition at room temperature for 1 month or more, no additional methanol was generated, no insoluble high-molecular-weight substance or the like was generated, and the aqueous composition remained colorless and transparent, and could be stored in a chemically stable state. Further, even when diluted 25 times with pure water, no additional methanol was generated. The aqueous composition after dilution could also be stored in a chemically stable state for one month or more.

### [Example 2] Preparation of aqueous composition containing 1-[3-(trihydroxysilyl)propyl]-2-imidazolidinone and condensate thereof

Except that the amount of pure water used was changed to 540.0 g (30.000 mol), the hydrolysis reaction was performed in the same manner as in Example 1, and then methanol was extracted. After cooling to room temperature, pure water was added so that the nonvolatile content was 1 to 2 wt% to prepare a colorless, transparent aqueous composition.

When the prepared aqueous composition was analyzed by gas chromatography (internal standard method), it was determined that the ratio of the area% of residual methanol and silanol compound (total of 1-[3-(trihydroxysilyl)propyl]-2-imidazolidinone and silanol condensate thereof) was 0.2:99.8. Further, when heated and dried at 105°C for 3 hours in a hot air oven, the nonvolatile content was 1 wt%.

Even after leaving this aqueous composition at room temperature for 1 month or more, no additional methanol was generated, no insoluble high-molecular-weight substance or the like was generated, and the aqueous composition remained colorless and transparent, and could be stored in a chemically stable state.

Further, even when diluted 25 times with pure water, no additional methanol was generated. The aqueous composition after dilution could also be stored in a chemically stable state for one month or more.

### [Example 3] Preparation of aqueous composition containing 1-[3-(trihydroxysilyl)propyl]-2-imidazolidinone and condensate thereof

Except that 1-[3-(trimethoxysilyl)propyl]-2-imidazolidinone in Example 1 was changed to 29.0 g (0.100 mol) of 1-[3-(triethoxysilyl)propyl]-2-imidazolidinone, the hydrolysis reaction was performed in the same manner as in Example 1, and then ethanol was extracted. After cooling to room temperature, pure water was added so that the nonvolatile content was 25 to 26 wt% to prepare a colorless, transparent aqueous composition.

When the prepared aqueous composition was analyzed by gas chromatography (internal standard method), it was determined that the ratio of the area% of residual ethanol and silanol compound (total of 1-[3-(trihydroxysilyl)propyl]-2-imidazolidinone and silanol condensate thereof) was 0.4:99.6. Further, when heated and dried at 105°C for 3 hours in a hot air oven, the nonvolatile content was 25 wt%.

Even after leaving this aqueous composition at room temperature for 1 month or more, no additional ethanol was generated, no insoluble high-molecular-weight substance or the like was generated, and the aqueous composition remained colorless and transparent, and could be stored in a chemically stable state. Further, even when diluted 25 times with pure water, no additional ethanol was generated. The aqueous composition after dilution could also be stored in a chemically stable state for one month or more.

### [Example 4] Preparation of aqueous composition containing 1-[3-(dihydroxymethylsilyl)propyl]-2-imidazolidinone and condensate thereof

Except that 1-[3-(trimethoxysilyl)propyl]-2-imidazolidinone in Example 1 was changed to 23.2 g (0.100 mol) of 1-[3-(dimethoxymethylsilyl)propyl]-2-imidazolidinone, the hydrolysis reaction was performed in the same manner as in Example 1, and then methanol was extracted. After cooling to room temperature, pure water was added so that the nonvolatile content was 25 to 26 wt% to prepare a colorless, transparent aqueous composition.

When the prepared aqueous composition was analyzed by gas chromatography (internal standard method), it was determined that the ratio of the area% of residual methanol and silanol compound (total of 1-[3-(dihydroxymethylsilyl)propyl]-2-imidazolidinone and silanol condensate thereof) was 0.3:99.7. Further, when heated and dried at 105°C for 3 hours in a hot air oven, the nonvolatile content was 25 wt%.

Even after leaving this aqueous composition at room temperature for 1 month or more, no additional methanol was generated, no insoluble high-molecular-weight substance or the like was generated, and the aqueous composition remained colorless and transparent, and could be stored in a chemically stable state. Further, even when diluted 25 times with pure water, no additional methanol was generated. The aqueous composition after dilution could also be stored in a chemically stable state for one month or more.

### [2] Preparation of aqueous composition containing silanol compound having organic group other than imidazolidinone group and silanol condensate

### [Comparative Example 1] Preparation of aqueous composition containing 3-(trihydroxysilyl)propylamine and condensate thereof

Except that 1-[3-(trimethoxysilyl)propyl]-2-imidazolidinone in Example 1 was changed to 17.9 g (1.000 mol) of 3-(trimethoxysilyl)propylamine, the hydrolysis was performed in the same manner as in Example 1, and then methanol was extracted. During the extraction of methanol, the appearance of the aqueous composition turned into yellow.

### [Comparative Example 2] Preparation of aqueous composition containing 3-(trihydroxysilyl)propylethylenediamine and condensate thereof

Except that 1-[3-(trimethoxysilyl)propyl]-2-imidazolidinone in Example 1 was changed to 22.2 g (0.100 mol) of 3-(trimethoxysilyl)propylethylenediamine, the hydrolysis was performed in the same manner as in Example 1, and then methanol was extracted. During the extraction of methanol, the appearance of the aqueous composition turned into yellow.

### [Comparative Example 3] Preparation of aqueous composition containing 3-(trihydroxysilyl)propylphenylamine and condensate thereof

Except that 1-[3-(trimethoxysilyl)propyl]-2-imidazolidinone in Example 1 was changed to 25.5 g (0.100 mol) of 3-(trimethoxysilyl)propylphenylamine, the hydrolysis was performed in the same manner as in Example 1, and then methanol was extracted. During the extraction of methanol, a solid high-molecular-weight substance with low compatibility with the aqueous composition was produced.

### [Comparative Example 4] Preparation of aqueous composition containing 3-(trihydroxysilyl)propane and condensate thereof

Except that 1-[3-(trimethoxysilyl)propyl]-2-imidazolidinone in Example 1 was changed to 16.4 g (0.100 mol) of 3-(trimethoxysilyl)propane and THF was used as a solvent, the hydrolysis was performed in the same manner as in Example 1, and then methanol was extracted. During the extraction of methanol, a solid high-molecular-weight substance with low compatibility with the aqueous composition was produced.

### [Comparative Example 5] Preparation of aqueous composition containing 3-(trihydroxysilyl)propylmethacrylate and condensate thereof

Except that 1-[3-(trimethoxysilyl)propyl]-2-imidazolidinone in Example 1 was changed to 24.8 g (0.100 mol) of 3-(trimethoxysilyl)propylmethacrylate and THF was used as a solvent, the hydrolysis was performed in the same manner as in Example 1, and then methanol was extracted. During the extraction of methanol, a solid high-molecular-weight substance with low compatibility with the aqueous composition was produced.

### [3] Treatment of Substrate with Aqueous Composition Containing Compound (1) and Condensate Thereof

### [Application Example 1] Treatment of substrate with aqueous composition containing 1-[3-(trihydroxysilyl)propyl]-2-imidazolidinone and condensate thereof

Pure water was added to the aqueous composition containing 1-[3-(trihydroxysilyl)propyl]-2-imidazolidinone obtained in Example 1 and a condensate thereof so that the nonvolatile content was 1 wt%, and the concentration was adjusted. A glass plate (manufactured by Matsunami Glass Ind., Ltd.; Slide glass, white and green frost No. 1, size 76 mm × 26 mm, thickness 0.8 to 1.0 mm, frost width 15 mm × 26 mm) which had been subjected to UV ozone cleaning in advance was immersed in 100 mL of the aqueous composition adjusted to 1 wt% at 25°C for 1 hour for treatment. The glass plate was lifted from the aqueous composition, immersed in 100 mL of acetone, ultrasonically cleaned for 1 hour at 25°C in an ultrasonic cleaner (manufactured by Honda Electronics Co.; W-221), and then dried at 50°C for 1 hour.

The contact angle of pure water (1 µL) was measured at 10 arbitrary points on the treated surface of the glass plate at 25°C, 50%RH after drying using a contact angle meter (DMs-401, analysis software FAMAS) manufactured by Kyowa Interface Science Co. The average contact angle was 32° with a standard deviation of less than 1.8°.

From this, it was found that the silanol group forms a covalent bond with the hydroxyl group on the surface of the glass plate, and the treated surface exhibits hydrophilicity by introduction of the imidazolidinone group.

### [Application Example 2] Treatment of substrate with aqueous composition containing 1-[3-(dihydroxymethylsilyl)propyl]-2-imidazolidinone and condensate thereof

A glass plate was treated in the same manner as in Application Example 1 except that the aqueous composition was changed to an aqueous composition containing 1-[3-(dihydroxymethylsilyl)propyl]-2-imidazolidinone obtained in Example 4 and a condensate thereof.

When the contact angle of the dried glass plate was measured in the same manner as in Application Example 1, the average contact angle was 32°, and the standard deviation was less than 1.8°.

From this, it was found that the silanol group forms a covalent bond with the hydroxyl group on the surface of the glass plate, and the treated surface exhibits hydrophilicity as a result of the introduction of the imidazolidinone group.

## Claims

1. An aqueous composition comprising a silanol compound having an imidazolidinone group of the following general formula (1): 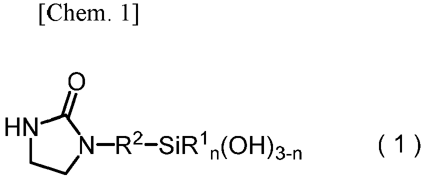 wherein, R¹ represents a halogen atom or a methyl group, R² represents an unsubstituted divalent hydrocarbon group having 1 to 8 carbon atoms, and n represents an integer of 0 to 2,
and a condensate of the silanol compound,
wherein a content of alcohol is less than 5 wt% with respect to the silanol compound and the condensate of the silanol compound.

2. A method for producing an aqueous composition according to claim 1, comprising a step of hydrolyzing an imidazolidinone silane compound of the following general formula (2) in the presence of water to remove generated alcohol: 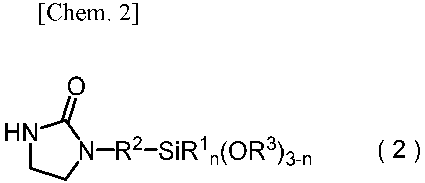 wherein, R¹, R² and n have the same meaning as described above, and R³ represents a substituted or unsubstituted monovalent hydrocarbon group having 1 to 10 carbon atoms.

3. The method for producing an aqueous composition according to claim 2, wherein the amount of the water is 3 to 100,000 mol per 1 mol of silicon atoms of the imidazolidinone silane compound.
